# EUROPEAN PATENT SPECIFICATION

(11) **EP 0 481 264 B1**
(45) Date of publication and mention of the grant of the patent: **20.11.1996**
(21) Application number: 91116418.4
(22) Date of filing: 26.09.1991
(51) Int. Cl.: G01N 9/32, F15C 1/00

(54) **Method and apparatus for measuring the density of a liquid**
Verfahren und Vorrichtung zum Messen der Dichte einer Flüssigkeit
Procédé et dispositif de mesure de la densité d'un liquide

(30) Priority: 15.10.1990 US 597945
(43) Date of publication of application: 22.04.1992
(73) Proprietor: AlliedSignal Inc., Morristown, New Jersey 07962-2245 (US)
(72) Inventor: Cassaday, Ernest W., c/o Allied-Signal Inc., Phoenix, Arizona 85010 (US); Roundy, James S., c/o Allied-Signal Inc., Phoenix, Arizona 85010 (US)
(74) Representative: Poidatz, Emmanuel

(56) References cited:
- EP-A- 0 117 150
- US-A- 4 175 423
- US-A- 4 508 127
- US-A- 4 644 781

## Description

The disclosure of U.S. Patent Nos. 4,508,127 Thurston and 4,930,357 Thurston et al is incorporated herein by reference thereto.

### TECHNICAL FIELD

This invention relates generally to liquid density measurement, and more specifically to liquid density measurement by electrofluidic means.

### BACKGROUND OF THE INVENTION

In a fluidic oscillator the oscillation frequency of the fluid jet is directly dependent on the velocity of the fluid in the jet stream. If the differential pressure across the oscillator is held constant, then the density of the fluid is directly proportional to a constant divided by the square of the oscillation frequency. Such oscillators are disclosed in the above-referenced patents.

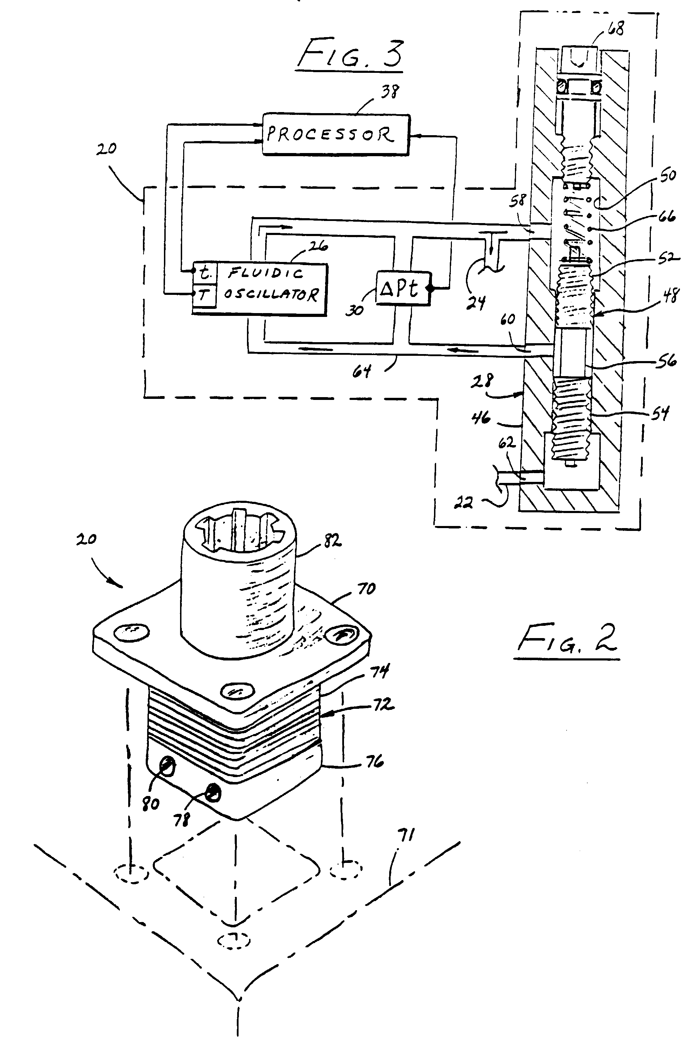

When employed as density sensors these oscillators are combined with pressure regulators (such as the regulator 42 illustrated in FIG. 2 of the '127 patent) to provide the constant differential pressure that is required. However, the pressure regulators are relatively massive, accounting for over ninety percent of the weight of the density meter. This creates problems in applications such as aircraft, for example, where weight and volume considerations may determine the choice made from among various density metering schemes.

An objective of this invention is to provide a process for electrofluidic liquid density measurement that accommodates the condition of varying differential pressure across the oscillator.

A further objective is to provide relatively light-weight and low-volume apparatus adapted for use with the above-mentioned process.

### DISCLOSURE OF THE INVENTION

This invention achieves the forementioned objectives by enabling the use of a fluidic jet oscillator as a density meter absent the requirement for a conventional high-precision pressure regulator.

In monitoring liquid density according to the invention, the liquid flows through a pressure divider and is forced under pressure through the fluidic oscillator. The oscillator responsively outputs a frequency signal that is indicative of the density of the liquid but is in error whenever the differential pressure across the oscillator varies from a predetermined value. The differential pressure is sensed by either two separate transducers or a single differential pressure transducer to produce a differential pressure signal.

Although the differential pressure will vary due to the substitution of a pressure divider for a precision pressure regulator, the frequency signals can be treated as spurious when the differential frequency signal is not in substantial accord with the predetermined value. Therefore, by employing the differential pressure signals as enabling signals in a gated control system which operatively responds to the frequency signals only when the differential pressure signals are substantially in accord with the predetermined value, one can accurately monitor the density of a liquid by use of a fluidic oscillator in combination with a pressure divider and a differential pressure transducer. The use of a mere pressure divider in conjunction with a differential pressure transducer as a substitute for a high-precision pressure regulator permits a weight reduction in excess of ninety percent.

### BRIEF DESCRIPTION OF THE DRAWINGS

FIG. 1 is a schematic illustration of an aircraft hydraulic system incorporating the invention.

FIG. 2 is a perspective view of a contemplated electrofluidic circuit element adapted for use with the invention.

FIG. 3 is a generally schematic and partially cross-sectional illustration of the apparatus shown in FIG. 2.

FIG. 4 is a schematic illustration of a gated electronic control system adapted for use with the invention.

### BEST MODE FOR CARRYING OUT THE INVENTION

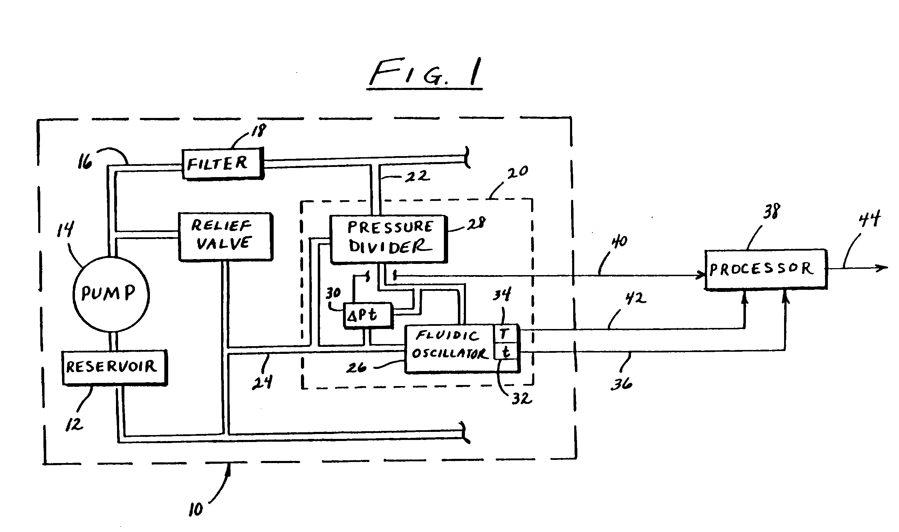

FIG. 1 is a schematic drawing partially illustrating an aircraft hydraulic system 10 which embodies principles of the present invention. Hydraulic oil from a reservoir 12 is supplied via a pump 14 along a main supply conduit 16 and through a high-pressure filter 18.

An air-in-oil sensor 20 receives the oil along a branch supply conduit 22 and returns the same to reservoir 12 via a branch vent conduit 24. The sensor 20 comprises a fluidic jet oscillator 26, a pressure divider 28, and a differential pressure transducer 30. The fluidic oscillator 26 is conventional in construction and is adapted to produce an output signal indicative of the density of the oil. The oscillator 26 is similar to apparatus described in the above-referenced patents, except that it is configured such that its two pressure transmission passages lead to opposite sides of a single piezoelectric transducer 32 rather than to separate transducers, and that it incorporates a thermistor 34 to monitor the temperature of the oil. Accordingly, the oscillator 26 in operation generates pressure waves that bear information indicative of the density of oil flowing therethrough. This information is communicated via the transducer 32 as an electrical frequency signal along a wire 36 to an external electronic processor 38. The differential pressure transducer 30 and thermistor 34 are elements of external circuit branches (indicated by lines 40, 42) connected to the processor 38 to provide differential pressure and temperature signals thereto. The processor 38 operatively responds to the frequency signals (as by communicating a change in status along an output line 44) only when the differential pressure signals are substantially in accord with a predetermined amplitude or frequency.

The sensor 20 is further illustrated in FIG. 3 wherein the pressure divider 28 is shown in greater detail. The divider 28 is formed by a cylindrical housing 46 and a cylindrical spool 48. The housing 46 has an axially extending stepped bore 50 formed therein. As indicated, the spool 48 has two larger-diameter threaded end portions 52, 54 separated by a smaller-diameter center portion 56. The end portions 52, 54 cooperate with the inner surface of the housing 46 to define two spaced flow restrictors. Three cross-bores extending from the outer surface of the housing 46 to the stepped bore 50 provide ports 58, 60, 62 through which the pressure divider 28 is in fluid communication with the branch vent conduit 24, an intermediate supply passage 64 leading to the supply port of the oscillator 26, and the branch supply conduit 22, respectively. The spool 48 is slidably disposed in a smaller-diameter portion of the stepped bore 50 as indicated so that the center portion 56 straddles the center port 60. A biasing spring 66 is rigidly secured to an adjustment screw 68 which is threadedly engaged with the housing 46. There is no preload on the spring 66. Thus, the spool 48 is urged against the spring 66 in response to the oil which is received at supply pressure through the high-pressure port 62. The spring 66 provides limited pressure regulation during operation of the sensor 20.

As currently contemplated, the sensor 20 is illustrated in FIG. 2. A mounting plate 70 is adapted for securement to a manifold 71 of the hydraulic system 10 (FIG. 1). Rigidly secured to one side of the plate 70 is a laminar structure 72 comprising a plurality of thin laminae 74 which collectively form the oscillator 26, and a thick base laminate or block 76. The base laminate 76 is adapted to receive the pressure divider 28 by the provision of a first-bore 78, and to receive the thermistor 34 and differential pressure transducer 30 by the provision of a second bore 80. The differential pressure transducer 30, thermistor 34, and pressure divider 28 are inserted in the indicated bores 78, 80 and rigidly secured within the structure 72 by suitable means so that the sensor 20 is formed as an integral electrofluidic circuit element. Accordingly, the laminar structure 72 is adapted by the provision of channels (not shown) therein to provide for the required fluid communication indicated by FIGS. 1 and 2. Likewise, both the laminar structure 72 and mounting plate 70 are adapted to provide for electrical communication from the differential pressure transducer 30 and thermistor 34 to a cylindrical boss 82 which is rigidly secured to the mounting plate 70 and is adapted for electrical connection to the processor 38 (FIG. 1).

In operation, high-pressure oil is supplied from the branch supply conduit 22 to the high-pressure port 62 of the pressure divider 28. The oil pressure is stepped down by the pressure divider 28 and a portion of the oil flows at a lower pressure through the center port 60, along the supply passage 64, and to the supply port of the oscillator 26. As the oil flows through the oscillator 26 to the vent passage 24, the oscillator generates a fluidic wavetrain having a frequency which depends on the density of the oil and on the difference in pressure between the supply passage 64 and the vent passage 24. The fluidic frequency signals are transduced to electrical frequency signals which are communicated to the processor 38. The differential pressure transducer 30 is fluidically connected across the oscillator 26 as indicated in FIG. 3, and is electrically connected to the processor 38 so as to function as a differential-pressure-responsive oscillator. Accordingly, depending on the selected circuit configuration, the differential pressure transducer 30 provides amplitude or frequency signals which vary with the pressure difference between the supply and vent passages 64, 24. These signals are communicated to the processor 38, and the latter incorporates any of a variety of circuits which employ the signals received from the differential pressure transducer 30 to enable an operative control response only when the amplitude or frequency of the signal is in substantial accord with that associated with a predetermined differential pressure.

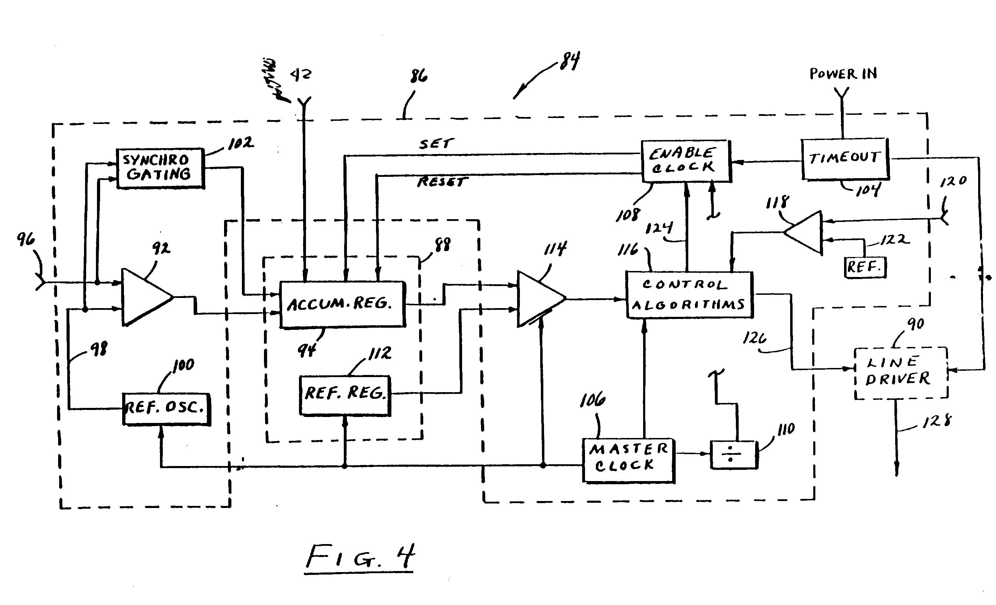

FIG. 4 illustrates an exemplary gated sampling and control system 84. The system 84 is embodied in integrated circuit chips incorporating CMOS chip architecture and comprising a microprocessor 86, a memory register 88, and a current limiting line driver 90.

A buffer amplifier 92 and accumulator register 94 form a differential counting register that receives frequency inputs 96, 98 from the fluidic oscillator 26 and a reference oscillator 100. The reference oscillator 100 is adapted to provide a predetermined reference frequency equivalent to that which is outputted by the fluidic oscillator 26 when the latter is operated at the predetermined differential pressure with zero percent air content in the oil. To provide initial noise immunity, the differential frequencies are synchrogated into the accumulator register 94 on a continuous basis. The accumulator register 94 receives the differential frequency count, and receives the temperature signal from the thermistor 34. The latter signal is employed in the accumulator register 94 to bias the least significant bit and compensate for frequency shift due to temperature differences between the reference oscillator 100 and the fluidic oscillator 26. The synchrogating circuit 102 is adapted to gate only those frequencies that accurately represent air content over the range of air content for which the system is designed. To prevent anomalies during start-up, a time-out circuit 104 inhibits operation of the system 84 for a period of time prescribed by the user to enable the hydraulic system 10 (FIG. 1) to achieve stability of flow and air content. After that period, the system 84 is brought on line and the master clock 106 starts the microprocessor 86. An enable clock 108 is provided from the output of the master clock 106 via a frequency divider 110. The enable clock 108 sets a sampling period for the accumulator register 94 and resets the register at the end of the period. Prior to reset, the data count of the accumulator register 94 is compared with a reference count from a reference register 112 by clocking both into a digital comparator 114. The output from the reference register 112 is a count limit associated with the frequency output from the fluidic oscillator 26 when the latter is operated at the predetermined differential pressure and with oil having a maximum percentage of air content as prescribed by the user. The output of the comparator 114 is an input to a set of control algorithms 116 programmed into the microprocessor 86. The digital output of a second comparator 118 is an input to the same set of algorithms. The inputs to the second comparator 118 are a voltage signal 120 received from the differential pressure transducer 30, and a reference voltage level 122 corresponding to the amplitude of the voltage signal 120 at the predetermined differential pressure. When the input 120 is substantially in accord with the input 122, the output of the second comparator enables the microprocessor 86 to communicate a sampling command 124 to the enable clock 108. The control algorithms 116 incorporate a conventional seven-sample retry system to validate data which indicate excessive air content. When the accumulator register 94 and reference register 112 counts are sufficiently different to indicate by the output of the first comparator 114 that air content is excessive, seven sampling periods are used to validate the data. If any of the seven sampling periods does not yield a consistent output from the comparator 114, the data are rejected as invalid. If all seven sampling periods show consistency in the output, a command signal 126 is communicated to the line driver 90, which operatively responds to the command signal by communicating to a cockpit display or vehicle management system a signal 128 indicating a change in status. Preferably, an additional algorithm is employed to detect a slowly changing air content that may cause the accumulator register 94 to contain a residual count over a seventy-unit sampling period. If seventy sampling periods register a consistently detectable count accumulation exceeding the count of the reference register 112, the microprocessor 86 communicates the command signal 126 to the line driver 90.

The invention should be construed in the broadest manner consistent with the following claims.

## Claims

1. Apparatus for use in monitoring liquid density, comprising a fluidic oscillator (26) adapted to produce output signals indicative of the density of a liquid flowing therethrough, and means (30) for sensing differential pressure;
characterized in that the apparatus further comprises a pressure divider (28) adapted to receive pressurized fluid from a source (14) thereof, the pressure divider (28) comprising first (54,46) and second (52,46) flow restrictors; the sensing means (30) being connected across the oscillator (26); the oscillator (26), sensing means (30), and pressure divider (28) being interconnected so as to cooperatively form an integral electrofluidic circuit element (20) defining first (62), second (60), and third (58) pressure levels of successively lower pressure; the oscillator (26), sensing means (30), and second flow (52,46) restrictor forming a parallel combination between the second (60) and third (58) pressure levels; and the first (54,46) flow restrictor being interposed between the first (62) and second (60) pressure levels.

2. A process for monitoring liquid density, comprising the steps of:
flowing a liquid at a first variable pressure level from a source thereof through a pressure divider to provide the liquid at a second variable pressure level;
flowing the liquid at the second variable pressure level through a fluidic oscillator (26) to a vent passage which is at a lower, third variable pressure level, whereby pressure waves are generated and collectively bear information which is indicative of the density of the liquid but which is subject to error dependent upon the difference in pressure between the second and third pressure levels; and
sensing the difference in pressure and producing electronic output signals indicative of the sensed difference.

3. A process as recited in Claim 2 further comprising the step of employing the signals in a gated sampling system (84) which operatively responds to the information only when the signals are substantially in accord with a predetermined signal characteristic associated with a predetermined difference in pressure.

## Patentansprüche

1. Gerät zur Verwendung bei der Flüssigkeitsdichtenüberwachung, mit einem Fluidoszillator (26), der die Dichte einer durch ihn fließenden Flüssigkeit anzeigende Ausgangssignale erzeugen kann, und einem Mittel (30) zum Messen von Differenzdruck;
dadurch gekennzeichnet, daß das Gerät weiterhin folgendes umfaßt: einen Druckteiler (28), der unter Druck stehendes Fluid von einer Quelle (14) dafür empfangen kann, wobei der Druckteiler (28) einen ersten Durchflußbegrenzer (54, 46) und einen zweiten Durchflußbegrenzer (52, 46) umfaßt; wobei das Meßmittel (30) parallel zum Oszillator (26) angeschlossen ist; wobei der Oszillator (26), das Meßmittel (30) und der Druckteiler (28) so miteinander verbunden sind, daß sie auf zusammenwirkende Weise ein integrales elektrofluidisches Schaltkreiselement (20) bilden, das ein erstes (62), ein zweites (60) und ein drittes (58) Druckniveau mit nacheinander niedrigerem Druck definiert; wobei der Oszillator (26), das Meßmittel (30) und der zweite Durchflußbegrenzer (52, 46) eine parallele Kombination zwischen dem zweiten Druckniveau (60) und dem dritten Druckniveau (58) bilden; und wobei der erste Durchflußbegrenzer (54, 46) zwischen dem ersten Druckniveau (62) und dem zweiten Druckniveau (60) angeordnet ist.

2. Verfahren zur Flüssigkeitsdichtenüberwachung, mit folgenden Schritten:
Fließenlassen einer Flüssigkeit mit einem ersten veränderlichen Druckniveau von einer Quelle dafür durch einen Druckteiler, um die Flüssigkeit mit einem zweiten veränderlichen Druckniveau bereitzustellen;
Fließenlassen der Flüssigkeit mit dem zweiten veränderlichen Druckniveau durch einen Fluidoszillator (26) zu einem auf einem niedrigeren, dritten veränderlichen Druckniveau befindlichen Auslaßkanal, wodurch Druckwellen erzeugt werden, die zusammen die Dichte der Flüssigkeit anzeigende Informationen tragen, welche jedoch in Abhängigkeit von dem Druckunterschied zwischen dem zweiten Druckniveau und dem dritten Druckniveau fehlerbehaftet sind; und
Messen des Druckunterschieds und Erzeugen von den gemessenen Unterschied anzeigenden elektronischen Ausgangssignalen.

3. Verfahren nach Anspruch 2, das weiterhin den Schritt umfaßt, die Signale in einem gattergesteuerten Abtastsystem (84) einzusetzen, das nur dann mit einer Handlung auf die Informationen reagiert, wenn die Signale im wesentlichen mit einer einem vorbestimmten Druckunterschied zugeordneten vorbestimmten Signaleigenschaft übereinstimmen.

## Revendications

1. Dispositif servant à contrôler la densité d'un liquide, comprenant un oscillateur fluidique (26) adapté de façon à produire des signaux de sortie indiquant la densité d'un liquide s'écoulant à travers lui, et des moyens (30) permettant de détecter une pression différentielle;
caractérisé en ce que le dispositif comprend en outre un diviseur de pression (28) adapté de façon à recevoir un fluide sous pression à partir d'une source (14) de celui-ci, le diviseur de pression (28) comprenant des premier (54,46) et second (52,46) dispositifs d'étranglement du courant; les moyens de détection (30) étant connectés de part et d'autre de l'oscillateur (26); l'oscillateur (26), les moyens de détection (30) et le diviseur de pression (28) étant interconnectés afin de former coopérativement un élément (20) de circuit électrofluidique intégral déterminant des premier (62), deuxième (60) et troisième (58) niveaux de pression de plus en plus faible; l'oscillateur (26), les moyens de détection (30) et le second (52,46) dispositif d'étranglement du courant formant une combinaison parallèle entre les deuxième (60) et troisième (58) niveaux de pression; et le premier (54,46) dispositif d'étranglement du courant étant interposé entre les premier (62) et deuxième (60) niveaux de pression.

2. Procédé permettant de contrôler la densité d'un liquide, comprenant les étapes consistant à:
faire s'écouler un liquide à un premier niveau de pression variable à partir d'une source de celui-ci à travers un diviseur de pression afin de fournir le liquide à un deuxième niveau de pression variable;
faire s'écouler le liquide au-deuxième niveau de pression variable à travers un oscillateur fluidique (26) vers un conduit d'évacuation se trouvant à un troisième niveau de pression variable plus faible, par quoi sont générées des ondes de compression qui produisent collectivement des informations indiquant la densité du liquide, mais qui comportent une erreur dépendant de la différence de pression entre les deuxième et troisième niveaux de pression; et
détecter la différence de pression et produire des signaux de sortie électroniques indiquant la différence détectée.

3. Procédé selon la revendication 2 comprenant en outre l'étape consistant à utiliser les signaux dans un système à échantillonnage (84) à déclenchement périodique qui ne répond activement aux informations que lorsque les signaux sont substantiellement en accord avec une caractéristique de signal prédéterminée, associée à une différence de pression prédéterminée.
